# EUROPEAN PATENT APPLICATION

(11) **EP 1 253 792 A1**
(43) Date of publication of application: **30.10.2002**
(21) Application number: 01110202.7
(22) Date of filing: 25.04.2001
(51) Int. Cl.: H04Q 7/24, H04B 7/26

(54) **Communication system, method of communication and base station**

(71) Applicant: Swissvoice AG, 4500 Solothurn (CH)
(72) Inventor: Baev, Stoyan, 4500 Solothurn (CH)
(74) Representative: Rutz, Peter

(57) **Abstract**

The present invention relates to a communication system, a method of communication and a base station wherein the DECT (Digital Enhanced Cordless Telecommunication) technology or a related technology is used. The system comprises a first base station (1) serving a first local network (13) and capable of providing access to an external network (6, 7) to at least one portable termination. The system further comprises a second base station (2) serving a second local network (12).The second base station (2) is portable and comprises means for acting as a mobile terminal of the first local network (13) for cordless communication with the first base station (1) and means for acting as a base station of the second local network (12) for cordless communication with at least one mobile terminal (4, 5). A communication system with high flexibility is provided.

## Description

The present invention relates to a communication system, a method of communication and a base station according to claim 1, 6 respectively 11.

More particularly, the present invention relates to a method for cordless communication between terminals using as telecommunication protocol the Digital Enhanced Cordless Telecommunications (DECT) technology as standardised by the European Telecommunications Standardisation Institute (ETSI), or any DECT derivative, e.g. Personal Wireless Telecommunications (PWT) which has been standardised within the North America Telecommunications Industry Association (TIA). Other cordless technologies using a dynamic channel selection may be applicable as well.

The Digital Enhanced Cordless Telecommunication (DECT) is described in a number of related standards developed by the European Telecommunications Standards Institute (ETSI). The multipart EN 300 175 DECT Common Interface (CI) standard specifies the DECT basic Physical and Protocol requirements. A number of other standards describe particular DECT applications and are commonly known as DECT Profiles.

One such Profile is the EN 301 649 DECT DPRS (Data Packet Radio Service) standard. The DPRS profile specifies how the DECT technology may be applied to provide wireless transport mechanism for transmission of data packets.

Those packets may be Protocol Data Units (PDUs) of different data protocols, e.g. Ethernet, Token Ring, PPP, IP, or, may be constructed out of the bit-streams transmitted by data protocols such as V.24. Another example is the EN 300 444 DECT Generic Access Profile (GAP) which specifies the basic DECT requirements for circuit switched voice and mobility management.

The DECT technology is a generic cordless access technology. Consequently the DECT protocol specifies how a number of DECT terminals can be intra connected within a local DECT wireless network, and how this Local DECT network can be inter connected to an external network to access the services offered by this external network.

A local DECT network comprises at least one base station and one or more mobile terminals. The base station is normally stationary and connected to a wired network with a cable. In DECT terminology, the base station is as well designated as Fixed Part or DECT Fixed Part (FP), which contains the logical elements of at least one Fixed radio Termination (FT). A FT is a logical group of functions that contains the DECT processes and procedures on the fixed side of the DECT air interface. A mobile terminal is as well designated as Portable Part or DECT Portable Part (PP), which contains the logical elements of at least one Portable radio Termination (PT). A PT is a logical group of functions that contains the DECT processes and procedures on the portable side of the DECT air interface.

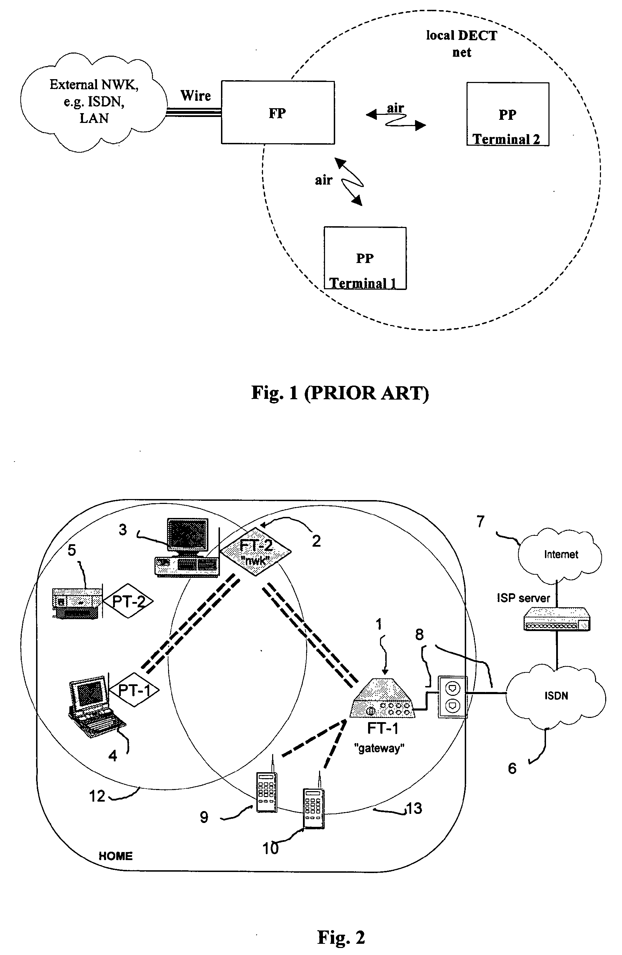

The basic Local DECT network reference model where a number of DECT Portable Parts (PP) are connected via a DECT Fixed Part (FP) to an external network is depicted in Figure 1. Depending on the terminal capabilities the communication path within and outside the Local DECT network may differ. For example if "Terminal 1" (a DECT PT) wants to communicate with "Terminal 2" (a DECT PT) the connection can either be routed via the base station FP, or can be a direct connection between the two terminals (not shown in figure 1). To perform a direct communication, the involved terminals need to support either "Direct PP-to-PP communication" or "Distributed communications" features standardised in the EN 300 175 DECT CI standard. In any case, when a DECT PT needs to communicate with the external network, the connection is always routed via the FP. In this case the FP plays the role of a Gateway to the external network.

Depending on the services that a Local DECT network intends to offer, a number of Application protocols may need to be implemented and run on top of the DECT protocol in the base station FP as well as in the mobile terminal PP. The number of the application protocols that need to be implemented and their complexity put different requirements on the design and the implementation of a DECT terminal.

With the availability of multiple Personal Computers (PC) and peripherals at home the issue of networking those multiple PCs with the different peripherals arises. Furthermore, providing access to the members of this network to an external network, for example Internet, comes under consideration as well. To satisfy these needs an enhanced Local DECT network needs to be designed which can provide wireless networking between PCs, peripherals and other home appliances, as well as shared Internet access among multiple PCs.

The FT design and implementation will therefore become more complex and consequently more costly. For example, in addition to the DECT and ISDN protocols the Ethernet, the TCP/IP, the PPP and other higher protocols need to be added.

EP-A 0 817 514 describes a cellular wireless communication system comprising a plurality of fixed base stations (DECT FPs) which provide a plurality of wireless communication channels and are able to communicate one with another via the air, where all base stations serve the same communication system and at least one of the base stations is connected via wire to an external network. The EP-A 0 817 514 assumes that the involved base stations do not form independent local networks on their own. It relates to the networking within such a system, in particular to mobility management functions, which therefore requires a common management system. It is, for example, described how a mobile terminal that moves between the base stations can be found for an incoming call. It is not specified how the base stations communicate with each other. The DECT protocol, however, specifies only how one or more base stations communicate via a cable.

It is an object of the present invention to provide a communication system on the basis of the DECT or a related technology, a corresponding method of communication and a base station which address the problems mentioned above and provide further opportunities. The communication system respectively the communication method shall be able to provide a plurality of services while allowing for a base station that does not require wired connection to provide access to an external network, which is of simple design and therefore less costly.

This object is achieved by a communication system with the features of claim 1, a method of communication with the features of claim 7 and a base station with the features of claim 12. Preferred embodiments are described in the dependent claims, the description and the drawings.

The communication system according to the invention comprises a first base station serving a first local network or communication subsystem wherein the DECT (Digital Enhanced Cordless Telecommunication) technology or a related technology is used. The first base stations is preferably capable of providing access to an external network to mobile terminals of the first local network. The inventive system further comprises at least one second base station, which serves a second local network or communication subsystem, wherein the DECT (Digital Enhanced Cordless Telecommunication) technology or a related technology is used. The second base station is portable and comprises means for acting as a mobile terminal in the first local network for cordless communication with the first base station. It further comprises means for acting as a base station in its own second local network for cordless communication with at least one mobile terminal of this subsystem. The second base station is thus seen from the first base station as an ordinary portable part.

The at least one second base station is portable in the sense that it does not require connection cables, plugs, and the like for communication. The second base station, however, is not necessarily moved between different places.

The inventive communication system comprises multiple independent communication subsystems which may comprise multiple portable terminals. The system allows for the communication subsystems to be wirelessly inter connected on the basis of DECT or other technology. The communication subsystems on the basis of DECT or related technology can wirelessly access other systems, e.g. an external network. According to the invention, the activities within the second local network are hidden from the other terminals of the first local network. The whole second subsystem appears to the first base station as a regular portable terminal.

Preferably, the first base station serves as a gateway to the external network for all terminals of the communication system, which require access. Portable terminals may be assigned to both base stations. As the communication within the second local network is handled by the second base station, the second base acts as cordless gateway to an external network to all terminals assigned to the second base. If requested, calls from the second local network are routed via the second and first base station to the external network or any terminal of the first local network. Further local networks may be linked together by providing further portable base stations, which communicate with the first base station via the air, either directly or via another second base station. A communication system with high flexibility is achieved.

Preferably, The second base station comprises a Fixed Termination with one or multiple radios. When one radio is used it handles both, the communication with the mobile terminals of the second local network performing as a Fixed Radio Termination (FT), and is able to perform as a Portable radio termination (PT) for communication with the first base station. When multiple radios are used they still can perform as both, or alternatively one radio may be dedicated as FT and another as PT. Independent from the number of radio used, alternatively the second base station may comprise a Fixed Termination (FT) and a Portable Termination (PT) where for example two separate protocol stacks are used to handle the communications when operating as FT and when operating as PT."

The first base station according to the invention can be a standard base station, e.g. a standard DECT FP. It is not necessary to implement multiple higher application protocols into this "gateway" base station, as the "gateway" only needs to handle the communication on DECT- and the external network level, e.g. ISDN-level. The activities of higher applications residing in the second local DECT network are handled by the second base station, whereas the first base station is unaware of those activities.

The second base station is preferably implemented as a module attached to or residing in a PC, a laptop, or another terminal, e.g. a router. This has the advantage that PC or other sophisticated terminal resources such as memory space and processing power, which are in most cases present anyway, can be used for the second base station. This reduces costs and complexity of the communication system. Most of the required application protocols, for example those needed to handle the networking and the shared internet are available or may be implemented on the PC and need not be provided by the DECT FT module itself. Hardware and software requirements and consequently the complexity and cost of the DECT module are further reduced by implementing parts of the DECT protocol stack in the PC as well. The design of the second base station is therefore simple and less costly.

The second base station may communicate with the first base station and respectively, via the first base station, with a terminal subscribed to the first base station or with an external network. Additionally, a mobile terminal subscribed to the second base station can communicate with the external network or a further mobile terminal by way of the first and second base station. The second base station comprises means for establishing a communication link between the mobile terminal and the first base station.

According to the invention, the second base station respectively a DECT FT has the capability to establish, maintain and release on air communication to another FT, i.e. the first base station or another "second" base station. A base station that supports the inventive method of communication is capable of supporting the normal FT operation as currently defined in the relevant DECT standards and of activating a special mode for on air communication with another FT.

In this "wireless FT-to-FT mode" (W-FT2FT mode) according to the invention the FT is capable to:
- search for, synchronise and lock to another FT following the rules defined for a PT currently in the DECT protocol (EN 300 175)
- register (subscribe) to another FT as a PT; registration can be done either following the procedures defined for a PT currently in the DECT protocol (e.g. on air subscription), or via a manually performed configuration procedure during which all identities relevant for a DECT subscription should be entered manually;
- perform with another FT Mobility management procedures as currently defined for a PT in the DECT protocol, e.g. location registration, ciphering, FT authentication, etc.; in all these procedures the FT that supports W-FT2FT communication behaves as a PT;
- establish a connection to another FT acting as a PT for the purpose of exchanging user data (i.e. a call);
- if connectionless services are to be supported, exchange connectionless information with another FT acting as a PT and following the rules defined for a PT currently in the DECT protocol.

Some examples for applications using the invention are
- a DECT wireless connection between two FTs used to provide access from a Local DECT network served by one of the FTs to an external network connected to the other FT;
- a DECT wireless connection between two FTs used to provide access from a Local DECT network served by one of the FTs to another Local DECT network served by the second FT.

Enabling the W-FT2FT mode could be done differently and depends much on implementation. One possibility is to use a pre-defined implementation dependent sequence of commands and part of an underlying communication protocol to instruct the second base station to activate the W-FT2FT mode. The commands are for example handled in the application layers of the second base station. Upon the receipt of the instructions, the relevant application sends a command, possibly via the DECT Lower Layer Management Entity (LLME) to the DECT Medium Access Control (MAC) layer to request the W-FT2FT mode. If the request is accepted, the physical layer (PHL) of the second base station starts searching for another DECT FT transmitting in the area. The application may initiate a subscription procedure in parallel if the second base station does not possess subscription to another base station. In this case, MAC should instruct the hardware, i.e. the DECT physical layer, to start searching for an FT that has subscription mode enabled. Depending on the hardware capabilities of the second base station, synchronization to an FT, respectively the first base station, may require adjustment of the transmissions of the part of the second base station that still transmits in FT mode, i.e. the part of the second base station acting as FT may need to synchronize with the first base station as well.

When operating in W-FT2FT mode, the FT may use two separate DECT protocol stacks each to handle the relevant mode (one for FT mode and one for PT mode). Alternatively, a unified protocol stack could be used where the differentiation is made on application level and necessary information is exchanged via the DECT LLME. In both cases, every call leg, i.e. the one within the second base station network and the one with the first base station, belongs to a different call. Internally, a switching software module connects the voice paths if the connection is used for voice, or exchanges data packets transmitted on each leg.

Preferred embodiments are depicted in the figures, which show schematically:
- Fig. 2: a reference model of an inventive communication system;
- Fig. 3: an example for the subscription procedure;
- Fig. 4: an example for communication of members of the Local DECT network with the external network;
- Fig. 5: an example for communication between portables belonging to the two base stations;
- Fig. 6: a reference model of an inventive communication system wherein the second base station comprises two radio fixed parts.

A reference model of an inventive communication system is shown in Figure 2. A DECT wireless connection between two base stations 1, 2 each having a FT-module FT-1, FT-2 and serving its own DECT local network 11 and 12 is used to provide access from the Local DECT network 12 served by one of the base stations 2 ("second" base station) to an external network 6, 7 connected to the other ("first") base station 1.

A first Local DECT network 11 is served by the first base station 1, respectively its FT-module FT-1. The first base station 1 may but does not need to support the inventive communication method "W-FT2FT". The first base station 1 is designed as a "gateway" base station providing access to one or more external networks, e.g. wired LAN, ISDN, xDSL, cable, etc, via a cable 8. The module FT-1 supports the requirements currently defined for a standard FP in the DPRS standard (EN 300 649). Additional requirements may be supported optionally. A number of voice and/or data terminals 9, 10 are subscribed to the first base station 1.

A second Local DECT net 12 is served by the second base station 2. The second base station 2 is a "W-FT2FT communication" capable base station according to the invention. It is attached to or implemented in a PC 3. Its FT-module FT-2 is provided with the necessary PT identities by the manufacturer or by the user. The FT-module FT-2 supports the DECT DPRS Ethernet interworking specification. Any other interworking can be applied as well, e.g. Token Ring, IP, PPP, V.24, USB, etc. The FT-module FT-2 is implemented as a normal Ethernet Card, thereby utilising other higher layer PC application protocols, e.g. TCP/IP implemented directly on the PC 3. The FT may use the PC resources for other needs as well, e.g. memory storage for DECT subscription and settings or even on PC implementation of entire parts of the DECT protocol. A number of portable parts PT-1, PT-2 are subscribed to the second base station 2 and are members of the Local DECT net 12. In the example these are DECT/Ethernet modules attached to or incorporated in a laptop 4 (module PT-1) and a printer 5 (module PT-2).

To provide access to Internet 7 for the terminals 4, 5 the user needs to subscribe the second base station 2 to the first base station 1. For this the User shall switch the second base station 2 respectively its FT-module FT-2 in the "W-FT2FT" mode. If PT identities (e.g. IPEI) are not provided to the FT-module FT-2 by the manufacturer, the user shall enter them manually. When the W-FT2FT mode is enabled and all necessary PT identities available, the second base station 2 respectively its FT-module FT-1, behaving as a PT, shall start searching for a suitable base station, i.e. a FT that allows subscription. When such a base station is found, in this example the first base station 1, the second base station 2 shall synchronise to the first base station 1 respectively its FT-module FT-1, shall lock to it and shall initiate the Obtain access rights procedure as currently described in the DECT standard and provide the necessary PT identities. The first base station 1 does not need to recognise that the PT applying for subscription is in fact a W-FT2FT communication capable FT.

The suitable base station may as well be a further "W-FT2FT" capable ("second") base station, which, in turn, searches for and synchronises to a further base station that could be the gateway ("first") base station.

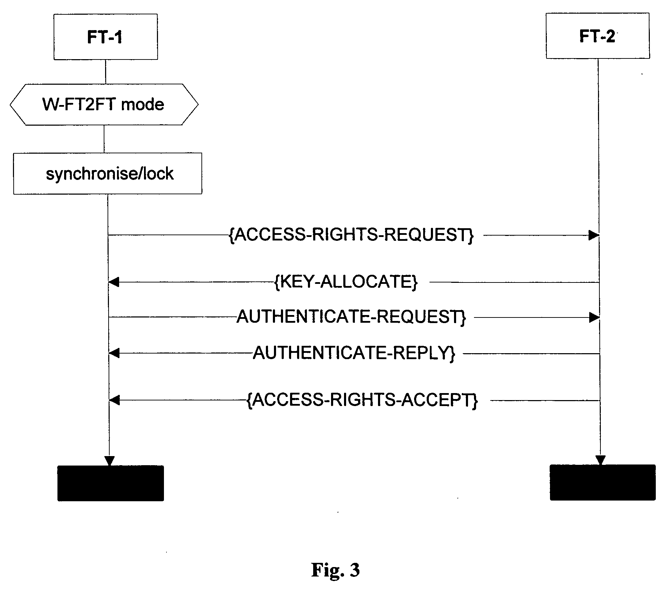

Fig. 3 shows an example for the subscription procedure.

After successful subscription, the FT-2 is capable, behaving as a PT, to establish outgoing calls to and to receive incoming calls from the FT-1. From this point on, FT-2 may but need not be constantly synchronised and locked to FT-1.

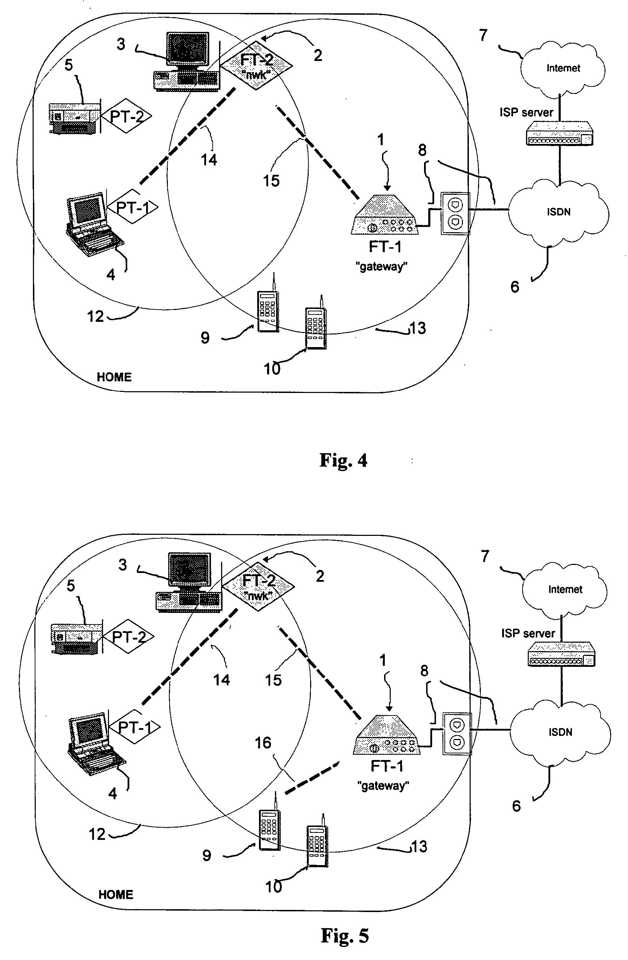

An example of communication with the external network from members of the Local DECT net 12 is shown in figure 4. For establishing an end to end communication between the laptop 4 and the Internet 7 a number of independent connections are established: a call leg 14 from the portable termination PT-1 on the laptop 4 to the fixed termination FT-2 on the second base station 2 which is implemented on a PC 3; a call leg 15 from the fixed termination FT-2 on the second base station 2 to the fixed termination FT-1 on base station 1; and finally, a communication from fixed termination FT-1 on base station 1 to the Internet 7. For establishing of the call leg 14 any suitable call setup procedure may be used, e.g. for DPRS supporting terminals the call setup procedure described in the EN 301 649. For establishing the connection on leg 14 the fixed termination FT-2 behaves as a normal DECT fixed termination conforming to the requirements described in the relevant standards. When the DECT connection on call leg 14 is established the exchange of data between the relevant applications in the Laptop 4 and the second base station 2 respectively PC 3 will start. When the FT-2 recognises what type of service is required by the PT-1 it activates the PC application software for this type of service, e.g. Internet sharing. Recognising that a user needs a connection to the Internet, the FT-2 activates the application responsible for establishing a connection to Internet, e.g. a dial-up application utilising the PPP protocol. The dial-up application requests establishment of a dial up connection from the underlying layers. This request is delivered to a switching module above the DECT protocol stack which identifies that a call establishment is required to the first base station 1 respectively to FT-1. The switching module in FT-2 requests from the DECT protocol stack to a establish PT initiated call providing the necessary FT-1 identities.

When operating in W-FT2FT mode, the second base station may use two separate DECT protocol stacks each to handle the relevant mode, i.e. one for the FT mode and one for the PT mode. Alternatively, a unified protocol stack could be used where the differentiation as what type of activity mode is required is made on application level and the necessary information is exchanged between the different DECT protocol entities via the DECT LLME. When using the same protocol stack the fixed and portable identities (e.g. PARK and IPUI and the related PMID; FMID) carried in the CC-SETUP information elements may be used by the LCE in the second base station to distinguish what type of call to establish, i.e. and FT or a PT initiated. These identities are used by MAC as well. When MAC receives a pair of identities PMID/FMID, where the PMID relates to the second base station in PT mode and FMID relates to another FT, and when it is locked to this FT as a PT, it initiates bearer establishment following the procedures described for a PT in the DECT protocol. Whenever the MAC recognises a PMID/FMID pair where the PMID is related to another known PT and the FMID is related to its own FT identities, it proceeds according to the DECT requirements for a FT.

In the example of Fig. 4 the DECT CC in the second base station 2 respectively FT-2 operating as a PT on request from the higher layers initiates an outgoing call and establishes a DECT connection to the first base station 1 respectively FT-1 on leg 15. From the FT-1 point of view the connection is to a subscribed PT, i.e. FT-1 does not see any difference between a PT and the FT-2 operating as PT. When the FT-1 recognises which kind of outgoing (external) call is requested it activates the application software of the first the base station 1 for this type of service, e.g. ISDN protocol stack. The ISDN application establishes the last part of the connection between the laptop 4 and the ISP server. An Internet connection from laptop 4 via PC 3 to Internet 7 is activated over this multiple legs connection, and data transmission can be started. For data transmission, for example a data packet is sent by an application in laptop 4 via the DECT connection on leg 14, is received from an application in PC 3, and is forwarded by the application in PC 3 to the base station 1 ISDN protocol application over the DECT connection on leg 15. The first base station 1 further send the packets to the Internet 7 using an ISDN connection.

If in another case, the user of the PC 3 in which the FT-module FT-2 of the second base station resides or is connected to wants to access the Internet, the FT-2 establishes only the second call leg 15 to the first base station 1 respectively to FT-1, whereby acting as a PT.

In addition to the communication that require access to the external network, communication between portables belonging to the two DECT networks 11, 12 can be performed as well. This scenario is shown in figure 5. A voice terminal 9 belonging to FT-1 wants to send a short message to the Laptop 4 (PT-1) belonging to the Local DECT net 12 served by the second base station 2. To achieve this service, the Voice terminal 9 requests with call 16 from the first base station 1 respectively FT-1 an internal call to FT-2, which from the point of view of the FT-1 is a portable terminal. After the FT-1 established the call 15 to the FT-2, the FT-2 recognises that this is a call for the Laptop 4. In turn, the FT-2 establishes an incoming call 14 to the PT-1 of laptop 4 and the call 14, 15, 16 between the Voice portable 9 and PT-1 will be connected through.

The invention has a positive impact on bandwidth usage for data transfer between two PCs (very often the case in a household scenario), e.g. PC 3 and laptop 4. As the PC 3 acts as base station 2, the full data rate can be used for data transfer. This is twice of the data rate available in a prior art scenario where the PC 3 acts as a portable terminal (PP) and the connection with laptop 4 is routed via a fixed base station.

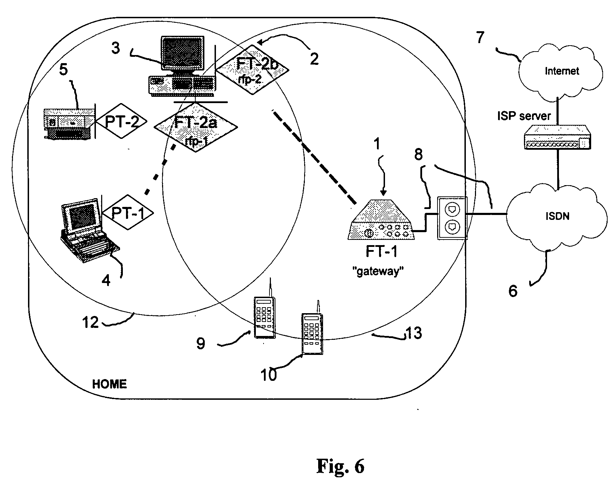

To facilitate the bandwidth usage the second base station 2 may be implemented as two radio fixed parts FT-2a, FT-2b. One of them communicates with the portable terminals 4, 5 and the other one with the first base station 1. This is shown in figure 6. Internal data distribution between the two radio fixed parts FT-2a, FT-2b can be implemented on the PC. The radio fixed part that communicates with the first base station 1 could be replaced by a Portable radio Termination (PT).

In addition to the connection oriented communication between the two base stations described above, connectionless data exchange can be performed as well. A base station that supports W-FT2FT connectionless communication needs to support the requirements imposed on a PT connectionless activities in addition to those for FT connectionless activities.

## Claims

1. A communication system comprising
a first base station (1) serving a first local network (13) wherein the DECT (Digital Enhanced Cordless Telecommunication) technology or a related technology is used;
at least one second base station (2) serving a second local network (12) wherein the DECT (Digital Enhanced Cordless Telecommunication) technology or a related technology is used;
wherein the at least one second base station (2) is portable and comprises means for acting as a mobile terminal in the first local network (13) and means for acting as a base station in the second local network (12).

2. Communication system according to claim 1, wherein the first base station (1) is capable of providing access to an external network (6, 7).

3. Communication system according to claim 1 or 2, wherein the second local network comprises a mobile terminal (4, 5), which communicates with an external network (6, 7) or a further mobile terminal (9, 10) by way of the first base station (1), wherein the second base station (2) comprises means for establishing a communication link between the mobile terminal (4, 5) and the first base station (1).

4. Communication system according to claim 1, 2 or 3, wherein the second base station (2) comprises a Fixed radio Termination FT according to DECT or other related technology for cordless communication with one or more mobile terminals (4, 5), which is able to perform as a Portable radio Termination PT according to DECT or other related technology for cordless communication with the first base station (1).

5. Communication system according to one of the preceding claims, wherein the second base station (2) comprises a Fixed radio Termination FT according to DECT for cordless communication with one or more mobile terminals (4, 5) and a Portable radio Termination PT according to DECT for cordless communication with the first base station (1).

6. Communication system according to claim 4 or 5, wherein the second base station (2) comprises or is attached to a personal computer (3), router or other networking device, and wherein at least a part of the Fixed and/or Portable radio Termination is implemented as a module (FT-2; FT-2a, FT-2b), which is attached to or residing in the personal computer (3).

7. A method of communication in a communication system according to one of the preceding claims, comprising the step of
the second base station (2) cordlessly communicating with the first base station (1) while acting as a mobile terminal.

8. Method of communication according to claim 7, further comprising the steps of
the second base station synchronising and/or getting locked and/or subscribing to the first base station, (1) while acting as a mobile terminal.

9. Method of communication according to claim 7 or 8, further comprising the steps of
the second base station (2) initiating and responding to mobility management procedures when communicating with the first base station (1), while acting as a mobile terminal;
the second base station (2) storing mobility management information related to the mobile terminal as which the second base station (2) acts in the first local network (13).

10. Method of communication according to one of claims 7 to 9, further comprising the steps of
the second base station (2) initiating, maintaining and releasing a call to the first base station and responding to, maintaining and releasing a call initiated from the first base station (1), while acting as a mobile terminal.

11. Method of communication according to one of claims 6 to 9, further comprising the steps of
the second base station (2) sending and/or receiving connectionless information to and/or from the first base station (1), while acting as a mobile terminal.

12. A base station (2) for cordless communication with at least one mobile terminal (4, 5) using the DECT (Digital Enhanced Cordless Telecommunication) technology or a related technology, which is portable and comprises means for acting as a mobile terminal for wireless communication with a further base station (1).

13. Base station according to claim 12, further comprising means for establishing a communication link between a mobile terminal (4, 5) and the further base station (1), hiding the existence of the mobile terminal (4, 5) from the further base station (1).

14. Base station according to claim 12 or 13, further comprising a Fixed radio Termination FT according to DECT for cordless communication with one or more mobile terminals, which is able to perform as a Portable radio Termination PT according to DECT for cordless communication with the further base station.

15. Base station (2) according to claim 12 or 13, further comprising a Fixed radio Termination FT according to DECT for cordless communication with one or more mobile terminals and a Portable radio Termination PT according to DECT for cordless communication with the further base station (1).

16. Base station (2) according to claims 14 or 15, which comprises or is attached to a personal computer (3), router or other networking terminal, wherein at least a part of the Fixed and/or Portable radio Termination is implemented as a module, which is attached to or residing in the personal computer (3), router or other networking terminal.
